(19) Europäisches Patentamt

European Patent Office

Office européen des brevets

(11) **EP 2 114 023 B1**

(12) **EUROPEAN PATENT SPECIFICATION**

(45) Date of publication and mention
of the grant of the patent:
**28.09.2011 Bulletin 2011/39**

(51) Int Cl.:
*H04B 7/26* (2006.01)      *H04L 25/03* (2006.01)

(21) Application number: **09168472.0**

(22) Date of filing: **28.09.2006**

(54) **Process for mitigation of interference in a mobile cellular network and base station of a mobile cellular network**

Verfahren zur Interferenzabschwächung in einem mobilen zellularen Netzwerk und Basisstation eines mobilen zellularen Netzwerks

Procédé pour l'atténuation de l'interférence dans un réseau cellulaire mobile et une station mobile d'un réseau cellulaire mobile

(84) Designated Contracting States:
**AT BE BG CH CY CZ DE DK EE ES FI FR GB GR HU IE IS IT LI LT LU LV MC NL PL PT RO SE SI SK TR**

(43) Date of publication of application:
**04.11.2009 Bulletin 2009/45**

(62) Document number(s) of the earlier application(s) in accordance with Art. 76 EPC:
**06020423.7 / 1 906 559**

(73) Proprietor: **Vodafone Holding GmbH**
**40213 Düsseldorf (DE)**

(72) Inventors:
• **Khattak, Shahid**
  **Canal Town 25120 (PK)**
• **Fettweis, Prof. Dr., Gerhard**
  **Dresden, 01326 (DE)**

(74) Representative: **Taruttis, Tilman et al**
**Bosch Jehle**
**Patentanwaltsgesellschaft mbH**
**Flüggenstraße 13**
**80639 München (DE)**

(56) References cited:
**EP-A2- 0 766 416      EP-A2- 1 261 141**
**WO-A-97/02666      WO-A-98/57452**
**US-A- 4 434 505**

• **RANTA P A ET AL: "TDMA cellular network application of an interference cancellation technique" VEHICULAR TECHNOLOGY CONFERENCE, 1995 IEEE 45TH CHICAGO, IL, USA 25-28 JULY 1995, NEW YORK, NY, USA, IEEE, US, vol. 1, 25 July 1995 (1995-07-25), pages 296-300, XP010166942 ISBN: 0-7803-2742-X**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present invention relates to a process for mitigation of interference in a mobile cellular network and to a base station of a mobile cellular network.

Bandwidth intensive mobile multimedia applications used within mobile cellular networks necessitate higher data rates with a reliable, transparent access. Due to limited available spectrum, the system capacity of mobile cellular networks needs to be maximized by introducing a higher frequency reuse and smaller cell size. In such systems the interference from the neighboring cells, other cell interference, which is also referred to as OCI, becomes dominant. Without any interference cancellation scheme, OCI will limit the receiver performance offsetting any gains obtained through higher reuse.

One strategy to deal with OCI in uplink is to make available at each base station (BS) signals from all its immediate neighbors for joint processing. Assuming that channel state information is known at the receivers, the interfering signals can be detected and removed at each base station. The effect of such an arrangement not only reduces the aggregate transmitted power, but also results in much improved received signal to interference and noise ratio (SINR). By using a proper receiving strategy both array and diversity gain is obtained resulting in substantial increase in system capacity.

In WO 98/57452 A1 such a method and apparatus for cancelling signals in a spread-spectrum communication system are described. In this method a subscriber signal from a subscriber not in communication with the serving base station is removed from a composite signal received in a serving base station. The subscriber signal is removed from the composite signal by receiving information regarding potential interferers which are in communication with the nonserving base station. The information regarding potential interferers may be a list of potential interferers or despread transmissions of potential interferers.

In EP 1 261 141 A2 an interference elimination system and interference eliminating method are described. In this system one base station is equipped with a regenerator for regenerating signals received at the radio of the base station. The regenerated signal is then transmitted to an interference eliminator of another base station. For regeneration of the signals correction signals may be used within the base station. These correction signals may include channel estimation signals. The channel estimation signals are transmitted from the modem of base station to the regenerator of the same base station. The only exchange between the two base stations is the exchange of the regenerated signals.

EP 0 766 416 describes a method and a corresponding system for reducing co-channel interference (CCI) in multiple access communication provides at least partial cancellation of a mixed CCI interfering signal in a system base station. Disclosed is a system wherein a first and a second base station communicates with users in a first and second cell respectively. The first base station transmits a downlink signal to a user in the first cell, wherein the said signal is a mixed CCI interfering signal as it interferes with reception of an uplink signal in the second base station. A cancellation signal representative of the interfering signal is supplied along a transmission path from the first to the second base station. The second base station utilizes the cancellation signal to reduce the effect of the interfering signal on a received composite signal by combining the cancellation signal with the received composite signal.

US 4,434,505 discloses that undesired intentional interference, i.e. Jamming signals in a multiple accessing mobile subscriber system employing a plurality of subscriber communication terminals, selectively transmitting and receiving desired signals from one another via a central node or repeater station, is achieved by intercepting relatively strong jamming signals, also directly received by the various subscriber communication terminals, and transmitting the jamming signals to the central node, where they are the retransmitted or relayed to the subsriber terminals in a dedicated orthogonal multiplexed channel relative to respective signal channels carrying desired communications signals. The relayed jamming signals are adjusted in the amlitude and time position so that they are equal to and coincident in time with the directly received jamming signals. The two jamming signals are then fed to signal differencing means which operates to cancel the jamming signals while providing an interference free output of the desired signal.

This joint detection, although optimal with respect to reducing power and improving the SINR, requires exchange of quantized received signals between all adjacent interfering base stations. Assuming 6-8 quantization bits per real dimension, backhaul traffic can easily exceed ten times the actual data. Such a high value of backhaul traffic is quite prohibitive.

One way to reduce this excessive backhaul is to employ distributed antennas systems (DAS), in which a group of base stations cooperate to perform joint processing at a single central point. The base stations therefore only perform radio frequency (RF) front end processing and send quantized baseband signals to a central unit for joint detection, thereby forming a virtual multiple input multiple output (MIMO) system. The central unit of each distributed antenna system detects and decodes received signals and makes available at its output the transmitted data from each mobile terminal.

While such an arrangement performs well for an isolated group of cooperating cell, its performance degrades in large networks at the DAS boundaries. Although this can be addressed by performing either interference mitigation or interference avoidance between neighboring DAS, it requires addition backhaul traffic between the central units.

The problem to be solved by the present invention is thus to provide a solution wherein interference, in particular OCI, can be minimized with minimal backhaul traffic.

The present invention is based on the finding that this problem can be solved by neighboring base stations cooperating by exchanging information while performing classical single user detection.

This object is solved by the process with the features according to independent claim 1. Furthermore, the object is solved by the base station with the features according to independent claim 8. Additional features and details of the present invention will become apparent from the dependent claims, the description as well as from the drawings. Features and details which are described with regard to the process of the present invention are also applicable to the base station of the present invention, and vice versa.

According to a first aspect, the problem is solved by a process for mitigation of interference in a mobile cellular network comprising at least two base stations for serving mobile terminals, wherein

> a) a first base station forming a first cell receives a signal from a first mobile terminal located in said first cell as well as interference from at least one further cell;
> b) the first base station further receives information data from at least one second base station; and
> c) the received signal from the first mobile terminal is being processed with the received information data to generate an estimate of the signal as sent by the first mobile terminal.

The base stations serving the mobile terminals are set up to send and to receive signals from mobile terminals. In addition the base station is set up to send and receive information or data to or from another base station, which will hereinafter be referred to as the second base station. The first and second base station can be of the same design or layout and are only as the first and second base station for clarity reasons.

According to the present invention the signal received from a mobile terminal at a base station will be referred to as the received signal. This signal may be at least partially masked with signals form other mobile terminals from a neighbouring cell. These signals from other mobile terminals of another cell will hereinafter also be referred to as interference. In contrast to the signal as received at the base station, the signal originally transmitted by the first mobile terminal will hereinafter be referred to as the signal as sent by the first mobile terminal.

By including information data received from the at least one second base station in the processing of a signal received at the first base station from a first mobile terminal, interference can be distinguished and the estimate of the signal as sent by the first terminal can be determined reliably. The information data is preferably derived with respect to a mobile terminals which is closest to the second base station. This signal would normally be constituting interference at the neighbouring base stations. The transmittal of information data for this terminal to the neighbouring base station, i.e. the first base station, will allow the identification of interference and the signals received at the first base station can be reliably distinguished from the interference.

The information data received from the at least one second base station preferably represents information bits, in particular hard bits.

By transferring information bits instead of all signals received at the second base station, as the prior art suggests, the traffic can be minimized while the information to detect interference will still be received at the first base station.

The process may further comprise the step of receiving reliability information at the first base station relating to the received information data.

The reliability information received from the at least second base station will allow the estimate established at the first base station to be more accurate. The reliability information may be used to calculate a residual noise term to which only the unreliable signals contribute. This noise term may then be used for further processing of the received signal.

The first base station transmits at least one processing result obtained by the processing of the received signal to the second base station. The result of the processing is preferably the estimate of the signal as sent by the first terminal.

By providing this result to another base station, detection of interference at that second base station can be performed in the same way as described for the first base station.

The first base station preferably receives and/or transmits the information data and/or the reliability information iteratively.

By iteratively providing the other base station with information data and/or reliability information the processing of signals received at the other base station will get more reliable per iteration.

In a preferred embodiment, the first base station receives and/or transmits only information data and/or reliability information which have changed since the previous iteration.

This selective transmission reduces the traffic between the at least two base stations. In addition the processing power necessary at the base station receiving the data and/or information is decreased. Only when a mobile terminal changes position and thus might be entering a different cell, the processing at the first base station has to include the new information and/or data for this terminal into the processing of a received signal.

In a preferred embodiment of the present invention, the process comprises the steps of processing a received signal at a first base station, transmitting at least part of the processing result to at least a second base station, the second base station including the received result for processing of a signal received at the second base station and transmits the result of the processing at least to the first base station for processing of a signal received at the first base station.

By performing these steps, an exchange of information and data between the at least two base stations will be realized. If this exchange is performed iteratively, the processing results at both base stations will improve.

The process according to the present invention is preferably carried out in a reuse network. In such networks the reuse of frequencies lead to OCI in neighbouring cells and the cancellation of the interference according to the present invention will allow a reliable detection of the interference and appropriate estimation of received signals.

According to a further aspect, the present invention relates to a base station of a mobile cellular network, comprising at least one input unit for receiving signals originating from a mobile terminal and least one communication interface for communication with a second base station as well as a processing unit. The base station is characterized in that the communication interface comprises at least one input interface for receiving information data and/or reliability information from the second base station and at least one output interface for transmitting information data and/or reliability information to the second base station.

The provision of a communication interface having the described input and output unit, allows for an exchange of information and data between base cells of a mobile cellular network and thus makes the processing of received signals at either of the base stations more reliable.

The processing unit preferably comprises an interference canceller unit adapted to process the received signal of the mobile terminal with information data and/or reliability information, said interference canceller unit being linked to the communication interface and the input unit.

An interference canceller unit, which is linked to the communication interface and the input device will be capable of subtracting out the energy corresponding to a signal constituting interference at this specific base station and will lead to a more reliable estimate of the signal as originally received at the base station.

The processing unit preferably comprises at least one unit for generating an estimate of the signal as sent by the mobile terminal. The unit for generating an estimate may in particular comprise an equalizer, a demapper, a deinterleaver as well as a decoder. The decoder may be a soft in soft out (SISO) decoder. The output of this processing unit with its elements will represent a-posteriori probability (APP) expressed as a log-likelyhood.

Such a processing unit may be in particular be advantageous for an orthogonal frequency division multiplexing (OFDM) based receiver of a base station, i.e. a multi carrier receiver. Corresponding layouts of the receiver may be employed for single carrier systems.

The input data or signal for the unit to generate an estimate is preferably the output of an interference canceller unit.

The processing unit may therefore further comprises at least one unit for preparing the information data and/or reliability information received from the receiver of the second base station for usage in the interference canceller unit. The unit for preparing the information data and/or reliability information may comprise an interleaver, a modulator as well as a multiplier.

The present invention can hence be used in an uplink of high reuse cellular networks for mitigation of interference from mobile terminals in the neighboring cells through distributive processing. In particular, neighboring base stations of such a network will cooperate by exchanging information while performing classical single user detection. This information exchange is preferably iterative with the estimate of the desired signal becoming more and more reliable after each iteration step. To reduce the required communication band width for the backhaul, exchange of the detected hard bits for the strongest received signal at each base station is performed according to one embodiment of the invention. This signal would normally constitute interference at the neighboring base station, where its corresponding energy is subtracted out resulting in a more reliable estimate. The present invention is preferably applied to networks, where the desired signal, i.e. the signal originally sent by a first mobile terminal is not fully masked by the interference. Therefore the present invention is preferably applied in networks which have a reuse factor of greater than one.

The units and elements of the base station described herein can be realized individually or in combination with at least one other unit or element by means of hardware or software.

The invention will now be explained again with reference to the attached figures, wherein:

Figure 1    shows a high reuse classical cellular network with outer cell interference
Figure 2    shows an example of inference limited classical cellular system performance
Figure 3    shows a 4 cell network employing distributed iterative detection.
Figure 4    shows a block diagram of the receiver used in distributed detection.
Figure 5    shows cumulative Distribution of Signal to interference ratio in cellular networks
Figure 6    shows an example of performance of the invention for different interference levels.

Figure 7    shows the backhaul traffic generated during distributive iterative detection.

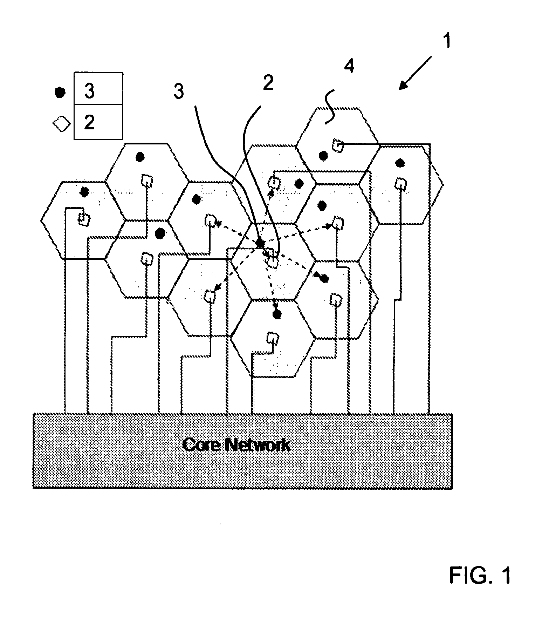

Fig. 1 shows a conventional cellular system 1 with each base station 2 performing single user detection independently, with out cooperation with its neighbors. The users are represented by the mobile terminals 3. In uplink transmission, the mobile terminal 3 transmits signal which are received not only by its nearest base station 2 but also the base stations in the surrounding cells 4 (shown by dotted lines in Fig. 1). This will result in OCI and will severely degrade the performance of the entire system 1.

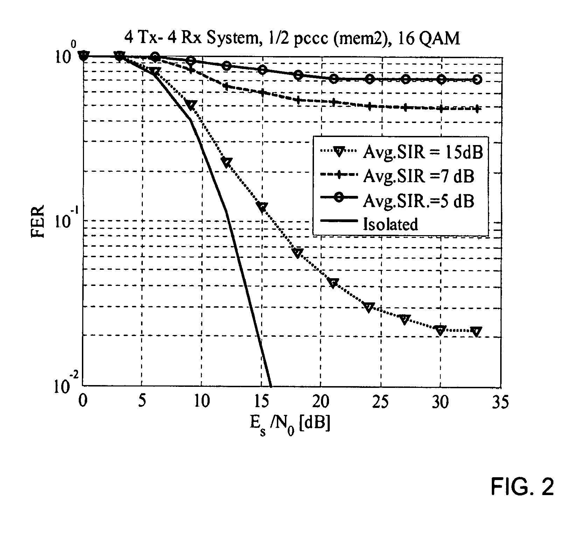

The performance of the cellular system 1 of Fig.1 is presented in Fig. 2 for an ITU vehicular A channel. It is evident that the performance degrades greatly as the signal to interference ratio SIR becomes less than 15 dB.

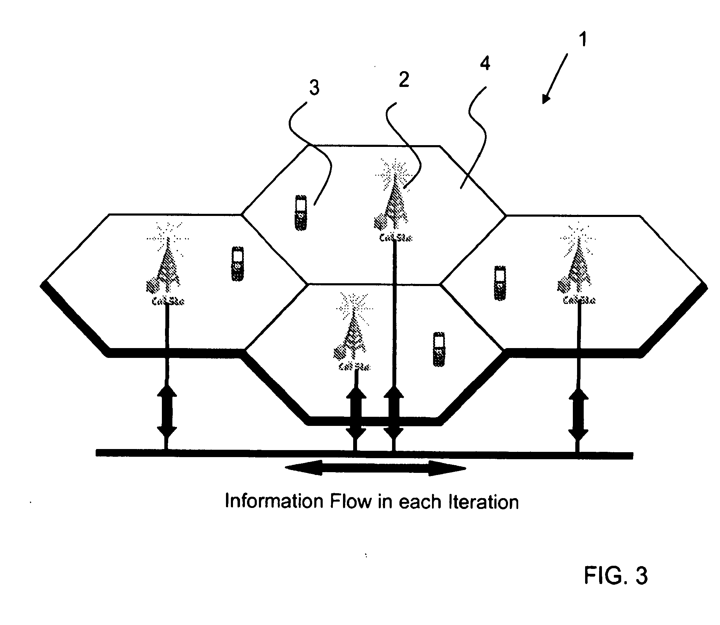

Fig.3 shows distributed iterative detection as an alternative strategy, which detects each user stream at its corresponding base station 2 and iteratively refines it through cooperation with its neighbors 2, i.e. the base stations 2 of the neighboring cells 4. The figure illustrates a four cell isolated cellular network 1 and indicates that the information bits are transferred between base stations 2 during each iteration. Each base station performs single user detection for the closest/strongest mobile terminal 3 while treating the signals received from all the other mobile terminals 3 as noise. It extracts the information bits from the output of the decoder and sends it to the neighboring base station 2 while also receiving the detected data from all its neighbors, i.e. the base stations 2 of the neighboring cells 4. The total interference energy received at each base station 2 is reconstructed and subtracted out of its received signal. Better estimates of the information bits are now obtained from this interference reduced signal. The exchange of information bit estimates and processing at the receiver of the base station 2 is repeated in subsequent iteration.

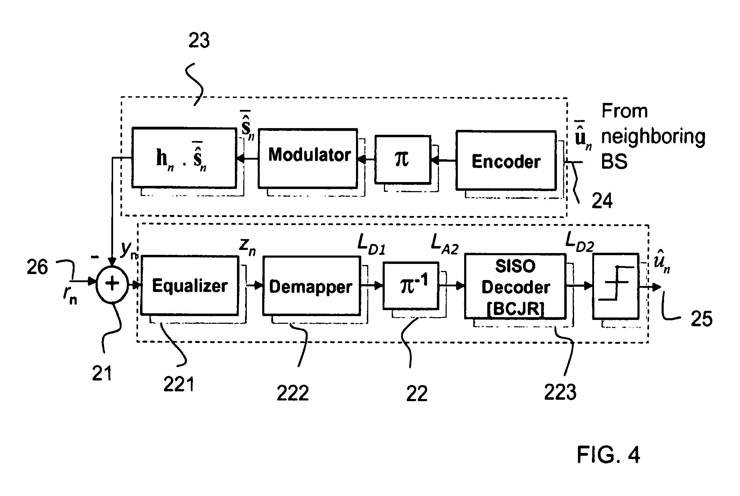

The invention works for both single carrier and multiple carrier system. Fig. 4 shows a block diagram as an example of an OFDM based (multi carrier) receiver used in distributive iterative detection. It has an interference subtractor or interference canceller 21 followed by a typical single user detector circuit 22, which is the unit for generating an estimate.

At the beginning of every iterative stage, energy of the interfering symbols from the neighboring 2 is subtracted out from the signal received at each base station, resulting in an interference reduced received signal. If $r_n$ is the signal received at the $n^{\text{th}}$ base station, the output $y_n$ of the interference canceller 21 is given as

$$y_n = r - \mathbf{h}_n \cdot \overline{\hat{\mathbf{s}}}_n \quad,$$

where $\overline{\hat{\mathbf{s}}}_n$ is the vector of symbol estimates with the entry corresponding to $n^{\text{th}}$ mobile terminal set equal to zero.

The energy corresponding to the interference to be subtracted from the received signal is calculated in a unit 23 for preparing the received signal from a neighboring base station 2 to become an input for the interference canceller 21.

The signal $r_n$ is received via an input unit 26 indicated in Figure 4 by the arrow. The information data received from the neighboring base station 2 is received via an input interface 24 indicated by an arrow in Figure 4. The result of the processing can be transmitted via an output interface 25 also only schematically indicated in Figure 4 by an arrow.

If the reliability of the transmitted information bits is also communicated, a residual noise term is calculated, to which only the unreliable symbols contribute. This is added to the receiver noise for the subsequent calculations. The noise variance after interference subtraction is therefore given as

$$\sigma_{n1}^2 = \sigma^2 + \underbrace{|\mathbf{h}_n|^2 \, \mathbf{e}_n \cdot SNR}_{\text{residual noise}} \quad,$$

where $\mathbf{e}_n$ is a vector with all zeros entries except for the terms corresponding to unreliable symbols, which are set equal to one. On the other hand if the reliability of the transmitted bits is not known, all the estimates can be considered reliable and noise variance remains unchanged.

The interference reduced signal $y_n$ is sent to an equalizer 221. For an OFDM system or flat fading channel single tap equalization is employed

$$z_n = g_n \cdot y_n ,$$

where $g_n \cdot h_n = 1$. The new noise value after equalization is also recalculated which for single tap equalization is given as.

$$\sigma_n^2 = \sigma_{n1}^2 \mid g_n \mid^2$$

The equalizer output $z_n$ and its corresponding noise value are sent to demapper 222 to compute the a-posteriori probability (APP). This is deinterleaved and fed as a priori information $L_{A2}$ to the channel input of the MAP decoder 223. The MAP BCJR decoder 223 delivers the APP about the information bits $u_n$.

The APP is usually expressed as a log-likelihood ratio ($L$ values). The a posteriori $L$ value of the coded bit $x_k$, $k=0...q$, conditioned on the filtered channel symbol $z_n$ is

$$L_{D1}(x_k \mid z_n) = \ln \frac{P[x_k = +1 \mid z_n]}{P[x_k = -1 \mid z_n]} \quad ,$$

where the logical bit zero is represented by amplitude level $x_k = +1$ and logical bit one represented as $x_k = -1$.

The L-values for the information bits from APP decoding of the outer channel code are also given as

$$L_{D2}(u_n \mid L_{A2}) = \ln \frac{P[u_n = +1 \mid L_{A2}]}{P[u_n = -1 \mid L_{A2}]} ,$$

where $u_n$ are the information bits. These $L$-values may be used to generate hard bits and additional reliability information which are then sent to neighboring nodes through output interface.

The information bits $\overline{\mathbf{u}}_n$ from neighboring base stations are received through the input interface. These are encoded, interleaved and modulated in 23 to generate a symbol estimate vector $\overline{\overline{\mathbf{s}}}_n$ ' which is already defined.

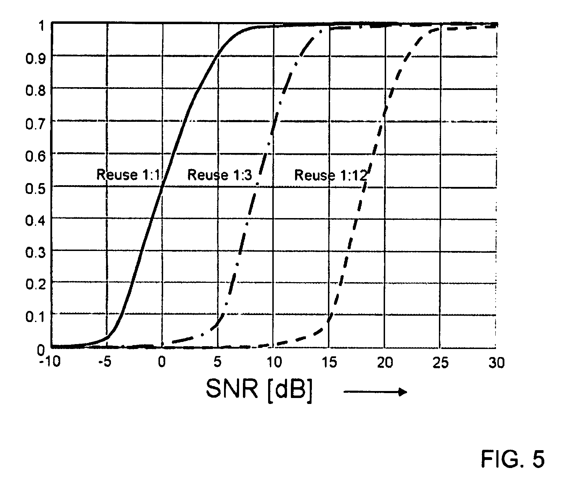

Figure 5 shows the cumulative distribution of SIR value in a three sectored cellular network based on Okumura-Hata flat plane model. It can be observed that in a reuse three system the mean SIR will stay around 8dB with approximately 95% of the users lying above 5dB.

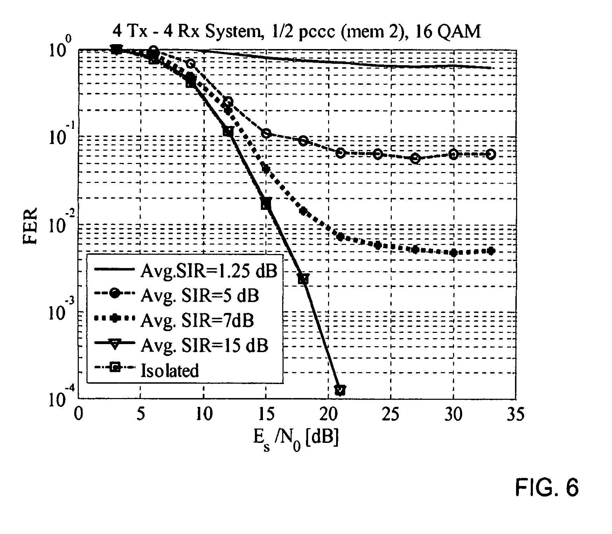

Fig. 6 shows the performance curves of the proposed system in Fig. 4 for an ITU vehicular A channel, for SIR values encountered in reuse three scenario. Since this channel is relatively flat at the signal bandwidth of 4 MHz, the channel coding is less effective and therefore the performance at low SIR (1.25-5 dB) values does not improve considerably. However beyond 5 dB the receiver performs well and at 15dB SIR approach the performance of an isolated single user receiver. It has also been shown that performance for a channel with higher diversity is substantially better (e.g. IID Rayleigh).

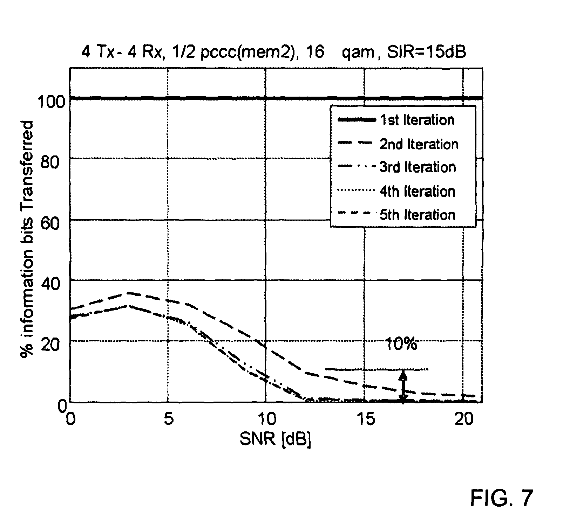

Distributed iterative detection requires less backhaul traffic, which can be further improved by sending in second and subsequent iterations only those bits which have changed since the last iteration and also adapting the number of iterations. Figure 7 shows the amount of backhaul traffic required for exchange of information bits during different iteration. It is seen that the amount of backhaul required after second iteration is very small for SNR of 12dB or above.

With the present invention the OCI in an uplink, high reuse network can be mitigated by exchanging the estimates of information bits between neighbouring base stations. The exchanged information can be used to remove the interference energy from the received signal and get a better estimate of the information bits. As the exchange of information is repeated iteratively the desired signal estimates improve with each iteration. In addition the exchange of raw information bits reduces the amount of backhaul required by approximately a factor of 5 when compared to optimal joint detection. For the SIR values encountered in reuse three cellular network isolated single user detection performance can be achieved.

**Claims**

1. Process for mitigation of interference in a mobile cellular network (1) comprising at least two base stations (2) for serving mobile terminals (3), wherein

   a) a first base station (2) shaping a first cell (4) receives a signal ($r_n$) from a first mobile terminal (3) located in said first cell (4) as well as interference from at least one further cell (4);
   b) the first base station (2) further receives information data ($\hat{u}_n$) from at least one second base station (2); and
   c) the received signal ($r_n$) from the first mobile terminal (3) is being processed with the received information data ($\hat{u}n$) to generate an estimate ($\hat{u}_n$) of the signal as sent by the first mobile terminal (3),
   **characterized in that**
   d) the first base station (2) transmits at least one processing result obtained by the processing of the received signal ($r_n$) to the second base station (2).

2. Process according to claim 1, wherein the processing result is the estimate ($\hat{u}_n$) of the signal as sent by the first mobile terminal (3).

3. Process according to any preceding claim, wherein the processing result comprises reliability information relating to the estimate of the signal as sent by the first mobile terminal (3).

4. Process according to any preceding claim, wherein said second base station (2) utilizes the received result for processing of a signal received at the second base station (2).

5. Process according to any preceding claim, wherein the process further comprises the step of receiving reliability information at the first base station (2) relating to the received information data ($\hat{u}_n$).

6. Process according to any preceding claim, wherein the first base station (2) receives and/or transmits the information data ($\hat{u}_n$) and/or the reliability information iteratively.

7. Process according to claim 6, wherein the first base station (2) receives and/or transmits only information data ($\hat{u}_n$) and/or reliability information which have changed since the previous iteration.

8. Process according to any preceding claim, further comprising that said second base station (2) transmits the result of the processing at least to the first base station (2) for processing of a signal ($r_n$) received at the first base station (2).

9. Base station of a mobile cellular network, comprising

   - at least one input unit (26) for receiving signals ($r_n$) originating from a mobile terminal (3) and
   - at least one communication interface (24, 25) for communication with a second base station (2) as well as a processing unit (21, 22, 23), wherein the communication interface (24, 25) comprises at least one input interface (24) for receiving information data ($\hat{u}_n$) and/or reliability information from the second base station (2),

   **characterized in that**

   - the communication interface (24, 25) comprises at least one output interface (25) for transmitting information data and/or reliability information to the second base station (2), and

   **in that** the base station is configured and adapted to transmit at least one processing result obtained by processingof the received signal to the second base station (2).

10. Base station according to claim 9, wherein the processing unit (21, 22, 23) comprises an interference canceller unit (21) adapted to process the received signal ($r_n$) of the mobile terminal (3) with information data ($\hat{u}_n$) and/or reliability information, said interference canceller unit (21) being linked to the communication interface (24, 25) and the input unit (26).

11. Base station according to any one of claims 9 or 10, wherein the processing unit (21, 22, 23) comprises at least one unit (22) for generating an estimate of the signal as sent by the mobile terminal.

**12.** Base station according to any one of claims 9 to 11, wherein the processing unit (21, 22, 23) comprises at least one unit (23) for preparing the information data ($\hat{u}_n$) and/or reliability information received from the second base station (2) for usage in the interference canceller unit (21).

**Patentansprüche**

**1.** Verfahren zur Verringerung von Störungen (Interferenzen) in einem mobilen zellularen Netz (1), das wenigstens zwei Basisstationen (2) zum Bedienen von mobilen Endgeräten (3) umfasst, wobei

a) eine erste Basisstation (2), die eine erste Zelle (4) formt, ein Signal ($r_n$) von einem ersten mobilen Endgerät (3), das sich in der ersten Zelle (4) befindet, sowie Störungen von wenigstens einer weiteren Zelle (4) empfängt;
b) die erste Basisstation (2) des Weiteren Informationsdaten ($\hat{u}_n$) von wenigstens einer zweiten Basisstation (2) empfängt; und
c) das von dem ersten mobilen Endgerät (3) empfangene Signal ($r_n$) mit den empfangenen Informationsdaten ($\hat{u}_n$) verarbeitet wird, um eine Schätzung ($\hat{u}_n$) des Signals zu erzeugen, wie dieses von dem ersten mobilen Endgerät (3) gesandt wurde,
**dadurch gekennzeichnet, dass**
d) die erste Basisstation (2) wenigstens ein Verarbeitungsergebnis, das durch die Verarbeitung des empfangenen Signals ($r_n$) erhalten wurde, an die zweite Basisstation (2) übermittelt.

**2.** Verfahren nach Anspruch 1, wobei das Verarbeitungsergebnis die Schätzung ($\hat{u}_n$) des Signals ist, wie dieses von dem ersten mobilen Endgerät (3) gesandt wurde.

**3.** Verfahren nach einem der vorhergehenden Ansprüche, wobei das Verarbeitungsergebnis Zuverlässigkeitsinformationen umfasst, die die Schätzung des Signals betreffen, wie dieses von dem ersten Endgerät (3) gesandt wurde.

**4.** Verfahren nach einem der vorhergehenden Ansprüche, wobei die zweite Basisstation (2) das empfangene Ergebnis für die Verarbeitung eines Signals verwendet, das an der zweiten Basisstation (2) empfangen wird.

**5.** Verfahren nach einem der vorhergehenden Ansprüche, wobei das Verfahren des Weiteren den Schritt des Empfangens von Zuverlässigkeitsinformationen an der ersten Basisstation (2) umfasst, die die empfangenen Informationsdaten ($\hat{u}_n$) betreffen.

**6.** Verfahren nach einem der vorhergehenden Ansprüche, wobei die erste Basisstation (2) die Informationsdaten ($\hat{u}_n$) und/oder die Zuverlässigkeitsinformationen iterativ empfängt und/oder übermittelt.

**7.** Verfahren nach Anspruch 6, wobei die erste Basisstation (2) lediglich Informationsdaten ($\hat{u}_n$) und/oder Zuverlässigkeitsinformationen empfängt und/oder übermittelt, die sich seit der vorhergehenden Iteration geändert haben.

**8.** Verfahren nach einem der vorhergehenden Ansprüche, das des Weiteren umfasst, dass die zweite Basisstation (2) das Ergebnis der Verarbeitung wenigstens an die erste Basisstation (2) für die Verarbeitung eines Signals ($r_n$), das an der ersten Basisstation (2) empfangen wird, übermittelt.

**9.** Basisstation eines mobilen zellularen Netzes, das Folgendes umfasst:

- wenigstens eine Eingangseinheit (26) zum Empfangen von Signalen ($r_n$), die von einem mobilen Endgerät (3) stammen, und
- wenigstens eine Kommunikationsschnittstelle (24, 25) zur Kommunikation mit einer zweiten Basisstation (2) sowie auch eine Verarbeitungseinheit (21, 22, 23), wobei die Kommunikationsschnittstelle (24, 25) wenigstens eine Eingangsschnittstelle (24) zum Empfangen von Informationsdaten ($\hat{u}_n$) und/oder Zuverlässigkeitsinformationen von der zweiten Basisstation (2) umfasst,

**dadurch gekennzeichnet, dass**

- die Kommunikationsschnittstelle (24, 25) wenigstens eine Ausgangsschnittstelle (25) zur Übermittlung von Informationsdaten und/oder Zuverlässigkeitsinformationen an die zweite Basisstation (2) umfasst, und

dass die Basisstation so konfiguriert und ausgelegt ist, dass sie wenigstens ein Verarbeitungsergebnis, das durch die Verarbeitung des empfangenen Signals erhalten wurde, an die zweite Basisstation (2) übermittelt.

10. Basisstation nach Anspruch 9, wobei die Verarbeitungseinheit (21, 22, 23) eine Interferenzauslöschereinheit (21) umfasst, die dafür ausgelegt ist, das empfangene Signal ($r_n$) des mobilen Endgeräts (3) mit Informationsdaten ($\hat{u}_n$) und/oder Zuverlässigkeitsinformationen zu verarbeiten, wobei die Interferenzauslöschereinheit (21) mit der Kommunikationsschnittstelle (24, 25) und der Eingangseinheit (26) verbunden ist.

11. Basisstation nach einem der Ansprüche 9 oder 10, wobei die Verarbeitungseinheit (21, 22, 23) wenigstens eine Einheit (22) zum Erzeugen einer Schätzung des Signals, wie dieses von dem mobilen Endgerät gesandt wurde, umfasst.

12. Basisstation nach einem der Ansprüche 9 bis 11, wobei die Verarbeitungseinheit (21, 22, 23) wenigstens eine Einheit (23) zur Vorbereitung der Informationsdaten ($\hat{u}_n$) und/oder der Zuverlässigkeitsinformationen, die von der zweiten Basisstation (2) empfangen wurden, für die Verwendung in der Interferenzauslöschereinheit (21) umfasst.

## Revendications

1. Procédé d'atténuation d'interférence dans un réseau cellulaire mobile (1) comprenant au moins deux stations de base (2) pour desservir des terminaux mobiles (3), dans lequel

   a) une première station de base (2) mettant en forme une première cellule (4) reçoit un signal ($r_n$) d'un premier terminal mobile (3) situé dans ladite première cellule (4) ainsi qu'une interférence provenant d'au moins une autre cellule (4) ;
   b) la première station de base (2) reçoit en outre des données d'information ($\hat{U}_n$) d'au moins une deuxième station de base (2) ; et
   c) le signal ($r_n$) reçu du premier terminal mobile (3) est traité avec les données d'information ($\hat{U}_n$) reçues pour générer une estimation ($\hat{U}_n$) du signal tel qu'envoyé par le premier terminal mobile (3),
   **caractérisé en ce que**
   d) la première station de base (2) transmet au moins un résultat de traitement obtenu par le traitement du signal ($r_n$) reçu à la deuxième station de base (2).

2. Procédé selon la revendication 1, dans lequel le résultat de traitement est l'estimation ($\hat{U}_n$) du signal tel qu'envoyé par le premier terminal mobile (3).

3. Procédé selon une quelconque revendication précédente, dans lequel le résultat de traitement comprend une information de fiabilité se rapportant à l'estimation du signal tel qu'envoyé par le premier terminal mobile (3).

4. Procédé selon une quelconque revendication précédente, dans lequel ladite deuxième station de base (2) utilise le résultat reçu pour le traitement d'un signal reçu au niveau de la deuxième station de base (2).

5. Procédé selon une quelconque revendication précédente, dans lequel le procédé comprend en outre l'étape de réception d'une information de fiabilité au niveau de la première station de base (2) se rapportant aux données d'information ($\hat{U}_n$) reçues.

6. Procédé selon une quelconque revendication précédente, dans lequel la première station de base (2) reçoit et/ou transmet les données d'information ($\hat{U}_n$) et/ou l'information de fiabilité de manière itérative.

7. Procédé selon la revendication 6, dans lequel la première station de base (2) reçoit et/ou transmet uniquement des données d'information ($\hat{U}_n$) et/ou une information de fiabilité qui ont changé depuis l'itération précédente.

8. Procédé selon une quelconque revendication précédente, comprenant en outre que ladite deuxième station de base (2) transmet le résultat du traitement au moins à la première station de base (2) pour un traitement d'un signal ($r_n$) reçu au niveau de la première station de base (2).

9. Station de base d'un réseau cellulaire mobile, comprenant :

- au moins une unité d'entrée (26) pour recevoir des signaux ($r_n$) provenant d'un terminal mobile (3) et
- au moins une interface de communication (24, 25) pour une communication avec une deuxième station de base (2) ainsi qu'une unité de traitement (21, 22, 23), dans laquelle l'interface de communication (24, 25) comprend au moins une interface d'entrée (24) pour recevoir des données d'information ($\hat{U}_n$) et/ou une information de fiabilité de la deuxième station de base (2),

**caractérisée en ce que**

- l'interface de communication (24, 25) comprend au moins une interface de sortie (25) pour transmettre des données d'information et/ou une information de fiabilité à la deuxième station de base (2), et

**en ce que** la station de base est configurée et adaptée de façon à transmettre au moins un résultat de traitement obtenu par un traitement du signal reçu à la deuxième station de base (2).

**10.** Station de base selon la revendication 9, dans laquelle l'unité de traitement (21, 22, 23) comprend une unité d'annulation d'interférence (21) adaptée à traiter le signal ($r_n$) reçu du terminal mobile (3) avec des données d'information ($\hat{U}_n$) et/ou une information de fiabilité, ladite unité d'annulation d'interférence (21) étant reliée à l'interface de communication (24, 25) et à l'unité d'entrée (26).

**11.** Station de base selon l'une quelconque des revendications 9 ou 10, dans laquelle l'unité de traitement (21, 22, 23) comprend au moins une unité (22) pour générer une estimation du signal tel qu'envoyé par le terminal mobile.

**12.** Station de base selon l'une quelconque des revendications 9 à 11, dans laquelle l'unité de traitement (21, 22, 23) comprend au moins une unité (23) pour préparer les données d'information ($\hat{U}_n$) et/ou l'information de fiabilité reçues de la deuxième station de base (2) pour une utilisation dans l'unité d'annulation d'interférence (21).

FIG. 1

FIG. 2

FIG. 3

Information Flow in each Iteration

FIG. 4

FIG. 5

4 Tx - 4 Rx System, 1/2 pccc (mem 2), 16 QAM

FER

$E_s / N_0$ [dB]

Avg. SIR=1.25 dB
Avg. SIR=5 dB
Avg. SIR=7dB
Avg. SIR=15 dB
Isolated

FIG. 6

FIG. 7

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9857452 A1
- EP 1261141 A2
- EP 0766416 A
- US 4434505 A